# EUROPEAN PATENT APPLICATION

(11) **EP 2 511 325 A2**
(43) Date of publication of application: **17.10.2012**
(21) Application number: 10836168.4
(22) Date of filing: 02.12.2010
(51) Int. Cl.: C08J 5/18, B29C 47/88, B29D 7/01

(54) **METHOD FOR FABRICATING A POLYOLEFIN SHEET USING A ROLLER DEVICE**

(30) Priority: 07.12.2009 KR 20090120701
(71) Applicant: SK Global Chemical Co., Ltd., Seoul 110-110 (KR)
(72) Inventor: KWON, Sang Min, Seoul 156-845 (KR); KIM, Seok Jin, Seoul 134-762 (KR); LEE, Tae Keun, Daejeon 305-761 (KR); CHUNG, Woon Ki, Seoul 138-170 (KR); YOO, Sung Bo, Goyang-si Gyeonggi-do 412-824 (KR)
(74) Representative: Noel, Chantal Odile
(86) International application number: PCT/KR2010/008591
(87) International publication number: WO 2011/071272

(57) **Abstract**

Provided herein is a method of manufacturing a polyolefin sheet using a circulating belt and a first roller, comprising the steps of heating polyolefin resin to melt polyolefin; and forming the molten polyolefin into a polyolefin sheet using an extruding die, wherein the circulating belt includes a plurality of second rollers (cooling rollers) which come into contact with an inner side of the circulating belt and are arranged in a circle around the circulating belt running in a circle and which cool the rotating circulating belt; a temperature of the circulating belt is maintained at 0 - 30°C to cool the polyolefin sheet such that the polyolefin sheet has desired thickness, a temperature of the first roller is set to a specific temperature between 40°C and 120°C, and the temperature of the first roller is maintained in a temperature range of the specific temperature ± 5°C; and a linear speed of the molten polyolefin sheet is substantially equal to a rotation speed of the circulating belt or the first roller to obtain a polyolefin sheet having a thickness of 0.05 - 0.45 mm and a width of 1100 - 1700 mm. The method is advantageous in that a wide-width polyolefin sheet having excellent flatness and a small thickness deviation can be manufactured.

## Description

### Technical Field

The present invention relates to a method of manufacturing a polyolefin sheet using a roller arrangement.

### Background Art

Generally, a polyolefin sheet (plastic sheet) is manufactured by a process including the steps of heating a molding material containing a thermoplastic polyolefin resin to melt the molding material; extruding the molten molding material into a sheet through an extruder; rolling the sheet to a predetermined thickness using a plurality of rollers; and polishing, cooling and then solidifying the rolled sheet.

Basically, a polyolefin, which is a crystalline resin, is difficult to be processed by calendering. For example, when polypropylene is processed by calendaring, it is impossible to process polypropylene because polypropylene adheres to the surface of a calender roll, and it is difficult to transfer a polypropylene film or sheet between calender rolls because the melt strength of polypropylene is low.

Therefore, generally, a polypropylene film or sheet is produced by T-die extrusion or blowing as disclosed in Patent document 1 or 2. However, when a polypropylene sheet is produced by the T-die extrusion disclosed in Patent document 1 or 2, it is difficult to obtain a thin and wide-width polypropylene sheet.

Meanwhile, recently, as disclosed in Patent document 3 or 4, many attempts have been made to form a polyolefin into a decorative sheet using calendering. However, these attempts are disadvantageous in that TPO (thermoplastic polyolefin) is generally used as a raw material, whereas it is rare for commonly available polyethylene to be processed by calendaring, and in that TPO is expensive although calendaring can be carried out by coupling TPOs in the process of polymerization. Further, Patent document 5 discloses a method of producing a decorative sheet by adding an inorganic material such as talc or the like to a polyolefin resin in an amount of about 40 wt% using calendaring.

However, this method is also disadvantageous in that the physical properties of a sheet cannot be easily adjusted, the processability thereof is deteriorated, the surface thereof becomes uneven, the thickness thereof cannot be easily adjusted, and only a mono-layer sheet can be produced.
Patent document 1: Korean Patent Registration No. 10-0821322
Patent document 2: Korean Unexamined Patent Publication No. 2008-68724
Patent document 3: US Patent No. 4,144,304
Patent document 4: US Patent No. 5,439,628
Patent document 5: Korean Patent Registration No. 10-0544398

### Disclosure

### Technical Problem

Thus, the present inventors found that, in the process of manufacturing a polyolefin sheet by extruding polyolefin, a thin and wide-width polyolefin sheet can be manufactured by using a cooling apparatus providing uniform cooling effects, by controlling the temperature conditions of a circulating belt and a cooling roller and by controlling the linear speed of a sheet melted in an extrusion die and the rotation speeds of a circulating belt and a cooling roller such that the linear speed thereof is substantially equal to the rotation speeds thereof Based on this finding, the present invention was competed.

Accordingly, an object of the present invention is to provide a method of manufacturing a wide-width polyolefin sheet having high flatness and a small thickness deviation.

### Technical Solution

In order to accomplish the above object, an aspect of the present invention provides a method of manufacturing a polyolefin sheet using a circulating belt and a roller arrangement, comprising the steps of: heating a polyolefin resin to melt the polyolefin; and forming the molten polyolefin into a polyolefin sheet using an extruding die, wherein the circulating belt includes a plurality of rollers (cooling rollers) which come into contact with an inner side of the circulating belt and are arranged in a circle around the circulating belt running in a circle and which cool the rotating circulating belt; a temperature of the circulating belt is maintained at 0 - 30°C to cool the polyolefin sheet such that the polyolefin sheet has a desired thickness, a temperature of each of the cooling rollers is set to a specific temperature between 40°C and 120°C, and the temperature of each of the cooling rollers is maintained in a temperature range of the specific temperature ±5 °C; and a linear speed of the molten polyolefin sheet is substantially equal to a rotation speed of the circulating belt or each of the cooling rollers to obtain a polyolefin sheet having a thickness of 0.05 - 0.45 mm and a width of 1100 -1700 mm.

In the method, the polyolefin may be polypropylene or a mixture of polypropylene and 2 - 25 wt% of an ethylene-propylene copolymer.

Further, the polyolefin may be a mixture of 50 - 99 wt% of polypropylene and 1 - 50 wt% of low-density polyethylene or linear low-density polyethylene, or a mixture of 2 - 25 wt% of an elastic ethylene-propylene copolymer and low-density polyethylene or linear low-density polyethylene.

Further, one of the rollers may be an elastic roller which is more elastic than the other rollers.

Further, each of the rollers may be provided therein with a space, and cooling fluid may pass through the space to cool the surface thereof

Further, the rollers may be supported and fixed by a shaft fixing unit such that they contract and expand in a radial direction under pressure exerted by the circulating belt.

### Advantageous Effects

The method of manufacturing a polyolefin sheet according to the present invention is advantageous in that a wide-with polyolefin sheet having high flatness and a small thickness deviation, that is, a polyolefin sheet having a thickness of 0.05 - 0.45 mm and a width of 1100 - 1700 mm can be manufactured.

### Description of Drawings

FIG. 1 is a sectional view showing a roller arrangement according to the present invention.
FIGS. 2 to 4 are schematic views explaining the principle of a shaft fixing unit of a roller arrangement according to the present invention.
FIG. 5 is a schematic front view showing an apparatus for manufacturing a polyolefin sheet according to the present invention, and FIG. 6 is a schematic side view showing an apparatus for manufacturing a polyolefin sheet according to the present invention.

### Mode for Invention

Hereinafter, the present invention will be described in detail with reference to the accompanying drawings.

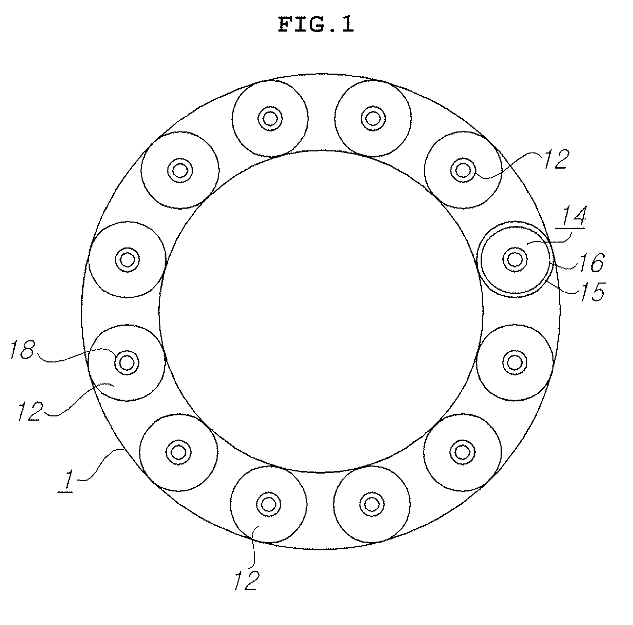

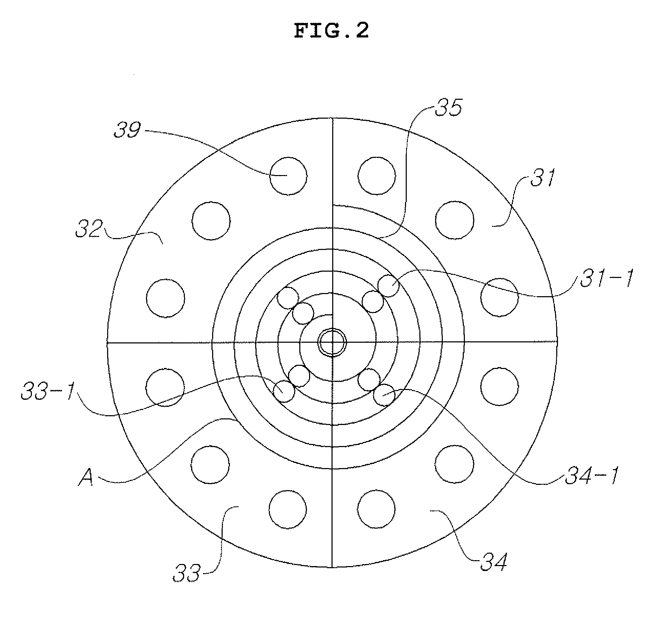

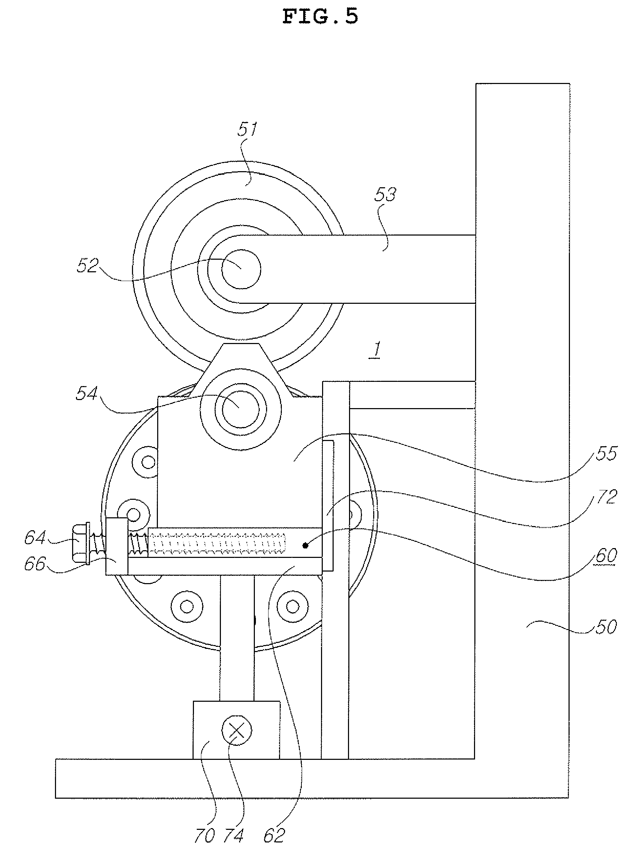

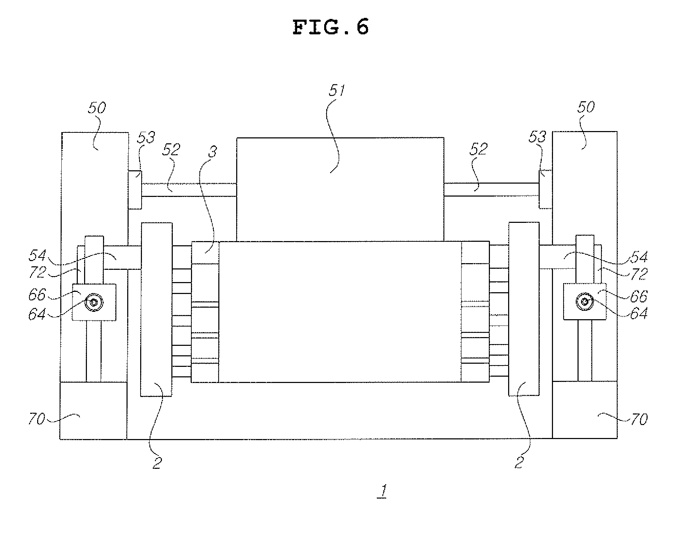

FIG. 1 is a schematic sectional view showing a roller arrangement including elastic rollers according to the present invention. FIGS. 2 to 4 are schematic views explaining the principle of a shaft fixing unit of a roller arrangement according to the present invention. FIG. 5 is a schematic front view showing an apparatus for manufacturing a polyolefin sheet according to the present invention, and FIG. 6 is a schematic side view showing an apparatus for manufacturing a polyolefin sheet according to the present invention.

Referring to FIG. 1, the roller arrangement of the present invention includes: a circulating belt 1; and a roller assembly including a plurality of rollers 12 coming into contact with the inner side of the circulating belt 1 and arranged in a circle pattern.

One of the rollers is an elastic roller 14 which is more elastic than the other rollers. The elastic roller 14 includes: a metal cylinder 16 having high strength; and an elastic layer 15 formed on the outer surface of the metal cylinder 16, having a thickness of 1 - 50 mm and made of silicon rubber, synthetic rubber or synthetic resin having elasticity and heat resistance. The elastic layer 15 is configured to have elasticity such that it is inwardly compressed by the pressure applied to the circulating belt 1, and is simultaneously balanced by the force (stress) countering the pressure, and then returns to its original position when the pressure dissipates.

Each of the rollers 12 includes an internal space. When cooling fluid (generally, cooling water) passes through the internal space, the surface of the roller 12 is cooled, thus maintaining the temperature of the circulating belt 1 at 0 - 30°C.

The circulating belt 1 is made of a material having high wear resistance and strength, and is an endless belt having a thickness of 0.2 - 0.5 mm and a length of 6 m. The abrasiveness of the surface of the circulating belt 1 pressing the polyolefin sheet to be produced may be generally similar to the abrasiveness of the surface of the cooling roller 12. The inner side of the circulating belt 1 comes into contact with the outer surfaces of the rollers 12, so that the heat emitted from the circulating belt 1 is transferrer to the rollers, with the result that the circulating belt 1 is cooled.

In the present invention, homopolypropylene (100 wt%) may be used as the polyolefin in order to obtain a product having excellent heat resistance and bending strength, and a mixture of polypropylene and 2 - 30 wt% of an elastic ethylene-propylene copolymer may be used as the polyolefin in order to obtain a product having excellent impact strength and hiding power. Here, when the amount of the elastic ethylene-propylene copolymer is less than 2 wt%, a product having the desired impact strength and hiding power cannot be obtained. Meanwhile, when the amount thereof is more than 30 wt%, a product having the desired bending strength and workability cannot be obtained.

Further, the polyolefin of the present invention may include polypropylene in an amount of 50 - 99 wt% in order to obtain a product having excellent workability, heat resistance and bending strength (stiffness), and, if necessary, may further include low-density polyethylene, linear low-density polyethylene or high-density polyethylene in an amount of 1 - 50 wt% in order to impart a product with flexibility. Here, when the amount of the polyethylene is less than 1 wt%, the effect of its addition is hardly exhibited, and when the amount thereof is more than 50 wt%, a product having the desired moldability cannot be obtained, and a product having the desired heat resistance and bending strength cannot be obtained. Even in this case, the homopolypropylene (100 wt%) or the mixture of polypropylene and 2 - 30 wt% of an elastic ethylene-propylene copolymer may also be used.

Meanwhile, each of the rollers 12 is configured such that the surface thereof is cooled by allowing cooling fluid to pass the roller 12 through a shaft 18. The surface of the roller 12 may be cooled using cooling water as the cooling fluid, and, if necessary, may be cooled by blowing cold air or by adiabatically expanding a compressed cooling medium.

These rollers 12 are supported and held by a shaft fixing unit (first shaft fixing unit) 2 which cause the rollers to be radially contracted and expanded relative to the center thereof.

The shaft fixing unit 2 includes: a worm gear; and a shaft holding strip which is radially moved by the rotation of the worm gear. Here, when the worm gear rotates, the rollers shafts held by the shaft holding strip are moved to or away from the center of the shaft holding strip. Alternatively, the shaft fixing unit may be composed of a chuck for holding a workpiece so that the roller shafts are supported by jaws of the chuck.

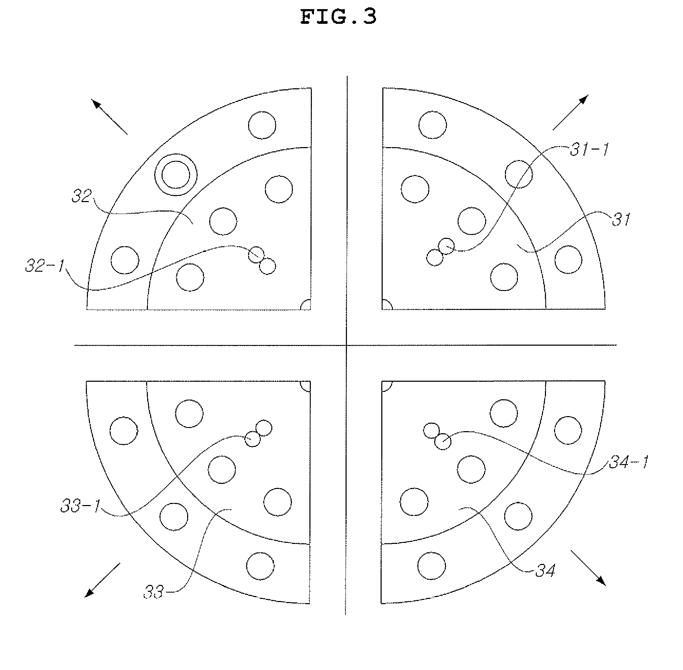

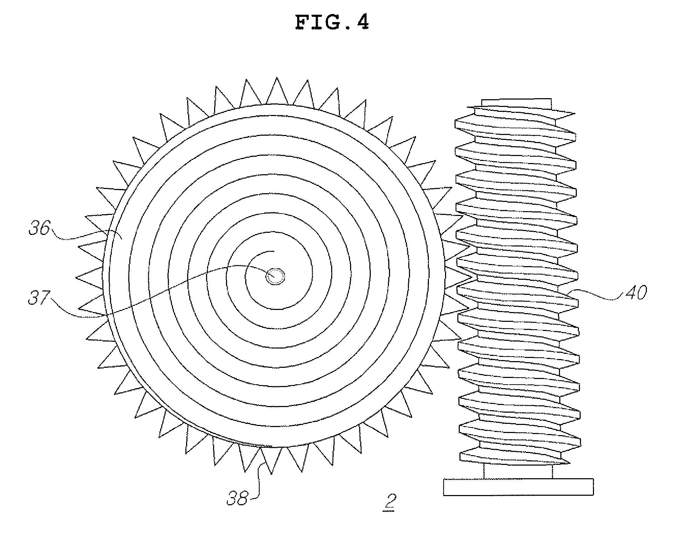

As shown in FIGS. 2 to 4, the shaft fixing unit 2 includes: quarter plates 31, 32, 33 and 34, a control plate 36 provided with a spiral strip 35; and a worm gear 40 for rotating the control plate 36. When the quarter plates 31, 32, 33 and 34 shown in FIG. 2 and the control plate 36 and worm gear 40 shown in FIG. 4 are assembled and the control plate 36 rotates, as shown in FIG. 3, the quarter plates 31, 32, 33 and 34 can be radially moved in the direction of the arrows of FIG. 3, and can be held at a predetermined position.

As shown in FIGS. 2 to 4, the shaft fixing unit 2 is configured as follows, the quarter plates 31 - 34 (which are obtained by dividing a disk into four parts; the disk may be divided into any number of parts selected from three to twelve parts), which are only radially moved by the rotation of the spiral strip 35 of the control plate 36, are provided with shaft-fitting grooves or holes 39 for accommodating the roller shafts, and the quarter plates 31 - 34 are assembled with the control plate equipped with the spiral strip 35. The control plate 36 is adapted to rotate around a shaft 37 and the quarter plates 31 - 34 are adapted to radially move in a direction perpendicular to the roller shafts. Consequently, when the gear teeth 38 of the control plate 36 engage with the worm gear 40 and the control plates 36 rotates by the worm gear 40, the quarter plates 31 - 34 radially move and then fix the roller shafts at predetermined positions.

The quarter plates 31 - 34 are fan-shaped plates made by dividing a disk into 4 parts (or any other number of parts selected from 3 to 12 parts), and are provided at the circumferences with shaft bearings. The quarter plates 31 - 34 (three-divided plates or six-divided plates) are only radially guided and moved relative to the center of a circle by a guide mechanism (not shown). The guide mechanism may be a guide trail or guide post which is known in the art.

The quarter plates 31 - 34 are provided with shaft-fitting grooves or holes 39 for accommodating roller shafts, and are respectively provided with engaging rods 31-1, 32-1, 33-1 and 34-1. When spiral strip 35 which is engaging with the rods rotates, the positions of the quarter plates 31 - 34 move inwardly or outwardly in a radial direction with respect to the center of the control plate 36 depending on the rotation direction of the worm gear 35. The spiral strip 35 shown in FIG. 2 refers to the spiral strip formed on the control pate 36 shown in FIG. 4. This spiral strip 35 is formed on the control palate 36, not on the quarter plates 31 - 34. Therefore, when the control plate 36 rotates, the quarter plates 31 - 34 move radially,

The control plate 36 equipped with the spiral strip 35 is coupled with the quarter plates. The control plate 36 is rotatably supported on a shaft 37. When the control plate 36 is rotated by engaging the gear teeth 38 of the control plate 36 with the worm gear 40, the quarter plates are radially moved to cause the roller shafts to radially move to or away from each other.

Unlike the arrangement shown in the drawings, the quarter plates may be provided with a mechanism for radially moving them by the same distance. The mechanism may be a chuck equipped with jaws, which is used to clamp a workpiece. That is, the quarter plates may serve as jaws of the chuck, or may be attached to the jaws of the chuck, or the bearings are directly fixed to the jaws of the chuck.

FIGS. 5 and 6 are schematic views showing an apparatus for manufacturing a polypropylene sheet using a roller arrangement.

The apparatus for manufacturing a polypropylene sheet is configured such that a first roller 51 mounted on a frame 50 engages with the roller arrangement 1 shown in FIG. 1 and then they rotate together.

A polyolefin molding material is melted, and the molten polyolefin molding material is extruded into a sheet in a former (or a die). Thereafter, as the sheet passes between the pair of rollers, the sheet is reduced to the desired thickness. The sheet having the desired thickness is cooled by other cooling rollers disposed behind the pair of rollers, thus manufacturing a polyolefin sheet. The water, which is cooled by a cooler (or chiller) or heated by a boiler, is introduced into the first roller 51 through a shaft 52 to cool or heat the roller such that the temperature of the first roller 51 is constantly maintained.

The apparatus for manufacturing a polypropylene sheet is configured such that the first roller 51 can be rotatably mounted on the shaft 52 supported on the frame 50. The roller engaging with the first roller 51 is an elastic roller 3, and a shaft bearing 55 is provided to change the direction of all the shafts of the roller arrangement. That is, the shaft of the roller arrangement may be parallel to or slightly oblique to the shaft of the first roller 51.

The first roller 51 is coupled with a shaft support 53 fixed on the frame 50 by the shaft 52, and the shaft 54 of the roller arrangement is supported by a second shaft fixing unit 55, 60, 70 such that the shaft 54 of the roller arrangement may be parallel to or slightly oblique to the shaft of the first roller.

The second shaft fixing unit is connected to the frame 50 so as to cause one or both ends of the shaft 54 of the roller arrangement to be moved. The shaft of the roller arrangement and the first roller 51 may be positioned such that they intersect each other at the midpoints thereof. As a result, non-crown rollers can be used as crown rollers.

The second shaft fixing unit includes a horizontal position control unit 60 and a vertical position control unit 70, which are connected to the frame 50. The horizontal position control unit 60 includes a horizontal guide member 62 for guiding the horizontal movement of the shaft 54 and a horizontal position fixing member (64, 66) for fixing the horizontal position of the shaft 54. The vertical position control unit 70 includes a vertical guide member 72 for guiding the vertical movement of the shaft 54 and a vertical position fixing member 74 for fixing the vertical position of the shaft 54. Each of the position control units 60 and 70 are provided with scales (not shown) indicating the degree of positional movement. In this case, it is preferred that each of the guide members 62 and 72 be marked with scales.

In order to easily control the positional movement of the shaft 54, each of the position fixing members (64, 66) and 74 may be provided with a force amplifier. For example, the horizontal position fixing member (64, 66) is provided with a force amplifier including a speed reducer, a handle and a screw, and a vertical position fixing member 74 is provided with a force amplifier including a bolt and nut.

In addition, a motor may be coupled with rollers by a power transmission gear in order to rotate and drive the rollers, and a cooling fluid supply pipe may be connected to rollers in order to heat or cool the rollers. Further, various devices may be coupled with rollers in order to impart the rollers with special functions.

In order to operate the apparatus for manufacturing a polyolefin sheet according to the present invention, the roller arrangement 1 is provided and operated such that the circulating belt is conveyed and cooled by controlling the shaft fixing unit 2, and the vertical position control unit 70 is controlled and operated such that the first rollers 51 and the roller arrangement 1 are rotated by an elastic roller at predetermined pressure. If necessary, the horizontal position control unit 60 may be controlled and operated such that the shaft of the roller arrangement 1 is parallel to or slightly oblique to the shaft of the first roller 51.

The molten sheet discharged from an extruder passes between the first roller 51 and the roller arrangement 1 to be pressed to a predetermined thickness, the pressed sheet is cooled, and then the cooled sheet is provided in the following process.

According to the apparatus for manufacturing a polypropylene sheet, the quality of a polyolefin sheet can be monitored and controlled because the position of the roller arrangement can be accurately changed while being operated.

Meanwhile, when this apparatus for manufacturing a polypropylene sheet is used, a wide-width polyolefin sheet having high flatness and small thickness deviation can be manufactured.

Conventionally, a decorative sheet or film is generally made of PVC, and is generally formed to having a wide width of 1320 mm in consideration of productivity, workability and the like. Since PVC, which is a noncrystalline resin, is produced in a non-melted state and has an unclear boundary between the liquid and solid phases, the flatness and thickness deviation of the PVC sheet or film does not depend on the temperature of cooling rollers. In contrast, since a polyolefin resin is a crystalline resin and is phase-changed at a specific temperature, the flatness and thickness deviation of a polyolefin sheet is greatly influenced by the temperature of cooling rollers.

Therefore, generally, it is difficult to produce a polyolefin sheet or film having high flatness and a small thickness deviation without stretching the polyolefin sheet or film. However, when the polyolefin sheet manufacturing apparatus having a circulating belt and cooling rollers according to the present invention is used, the temperature of the circulating belt and the cooling rollers can be controlled, thus manufacturing a thin and wide-width polyolefin sheet.

Further, the temperature of the circulating belt must be maintained at 0 - 30°C in order to prevent a a polyolefin sheet from adhering to rollers by cooling the polyolefin sheet without stretching the polyolefin sheet, and the temperature of the cooling roller must be maintained at 40 - 120°C in order to produce a polyolefin sheet in a consistent manner. When the temperature of the cooling roller is lower than 40°C, a polyolefin resin is cooled excessively rapidly, and thus the flatness of a polyolefin sheet becomes poor. Further, the temperature thereof is higher than 120°C, the flatness of the polyolefin sheet becomes poor, and the thickness deviation of the polyolefin sheet increases. However, the temperature of the cooling roller is set to a specific temperature (for example, 70°C) between 40°C and 120°C depending on the thickness of the desired polyolefin sheet. When a polyolefin sheet is manufactured at the specific temperature, a wide-width polyolefin sheet having excellent flatness and a small thickness deviation can be manufactured only when the temperature, of the cooling roller is maintained in a temperature range of the specific temperature ±5 ° C (for example, 70±5°C).

A crystalline resin undergoes a significant change around its melting point. Therefore, when a wide-width sheet is produced using a crystalline resin, the stretching degree of the sheet changes depending on the temperature, so that the flatness of the sheet becomes poor and the thickness deviation thereof becomes large, with the result that it is difficult to print and post-process the sheet.

Accordingly, the temperatures of the circulating belt and cooler roller for cooling a resin must not change in a width direction. Thus, the physical properties (thickness, strength and the like) of a sheet/film are determined by controlling the temperature of the cooling roller while maintaining the temperature of the circulating belt at 0 - 30 ° C.

Generally, when the temperature of the cooling roller is maintained at high temperature (90°C or more), the strength (tensile strength and stiffness) of the sheet/film become good, and, when the temperature thereof is maintained at low temperature (50°C or less), the flexibility thereof becomes better. Therefor, the temperatures of the circulating belt and the cooling roller play an important part in the physical properties of a polyolefin resin.

Further, since a decorative sheet/film attached to an adherend is exfoliated with the passage of time when it is constricted, a crystalline resin, such as a polyolefin resin, must not be stretched in the process of producing the decorative sheet/film. Therefore, in order to produce the decorative sheet/film without stretching the crystalline resin to prevent the decorative sheet/film from being exfoliated, it is important that the linear speed of a sheet discharged from a die be substantially equal to the rotation speed of the circulating belt or the cooling roller. Here, the term "substantially" is inevitably used because the linear speed of the sheet cannot be 100% equal to the rotation speed of the circulating belt or the cooling rollers, and the term "substantially equal" means that it includes an error in the range within which the sheet is not stretched.

In other words, when a crystalline resin is formed into a sheet/film by stretching the crystalline resin, the sheet/film contracts because it returns to a stable state as the time passes. Therefore, with the passage of time (at least several months), the sheet/film gradually contract and thus exfoliates, so that the sheet/film must be produced without stretching the crystalline resin in order to obtain a sheet/film which does not exfoliate and which has excellent durability and post-workability. Accordingly, a substantially non-stretched sheet/film can be produced when the linear speed of the molten sheet discharged from a die is substantially equal to the rotation speed of the circulating belt or the cooling roller.

Consequently, in the present invention, a polyolefin sheet having a thickness of 0.05 - 0.45 mm and a width of 1100 - 1700 mm can be manufactured. Even in this case, a polyolefin sheet having excellent flatness and a thickness deviation of 1.5 mm/M can be manufactured.

## Claims

1. A method of manufacturing a polyolefin sheet using a circulating belt and a roller arrangement, comprising the steps of:
heating a polyolefin resin to melt the polyolefin; and
forming the molten polyolefin into a polyolefin sheet using an extruding die,
wherein the circulating belt includes a plurality of rollers (cooling rollers) which come into contact with an inner side of the circulating belt and are arranged in a circle around the circulating belt running in a circle and which cool the rotating circulating belt;
a temperature of the circulating belt is maintained at 0 - 30° C to cool the polyolefin sheet such that the polyolefin sheet has a desired thickness, a temperature of each of the cooling rollers is set to a specific temperature between 40°C and 120°C, and the temperature of each of the cooling rollers is maintained in a temperature range of the specific temperature ±5 ° C; and
a linear speed of the molten polyolefin sheet is substantially equal to a rotation speed of the circulating belt or each of the cooling rollers to obtain a polyolefin sheet having a thickness of 0.05 - 0.45 mm and a width of 1100 - 1700 mm.

2. The method of claim 1, wherein the polyolefin is polypropylene or a mixture of polypropylene and 2 - 25 wt% of an elastic ethylene-propylene copolymer.

3. The method of claim 1, wherein the polyolefin is a mixture of 50 - 99 wt% of polypropylene and 1 - 50 wt% of low-density polyethylene or linear low-density polyethylene, or a mixture of 2 - 25 wt% of an elastic ethylene-propylene copolymer and low-density polyethylene or linear low-density polyethylene.

4. The method of claim 1, wherein one of the rollers is an elastic roller which is more elastic than other rollers.

5. The method of claim 1, wherein each of the rollers is provided therein with an internal space, and cooling fluid passes through the internal space to cool the surface thereof

6. The method of claim 1, wherein the rollers are supported and fixed by a shaft fixing unit such that they contract and expand in a radial direction under pressure exerted by the circulating belt.
